# EUROPEAN PATENT APPLICATION

(11) **EP 4 738 910 A1**
(43) Date of publication of application: **06.05.2026**
(21) Application number: 23943030.9
(22) Date of filing: 30.06.2023
(51) Int. Cl.: H04W 24/00

(54) **UPLINK COMMUNICATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/105377
(87) International publication number: WO 2025/000539

(57) **Abstract**

Disclosed in the embodiments of the present disclosure are an uplink communication method and apparatus. The method comprises: receiving first information, which is sent by a network device, wherein the first information is used for configuring a terminal to perform channel state information (CSI) measurement and beam reporting; and sending second information to the network device on the basis of the first information, wherein the second information is used for indicating a plurality of beams, the second information is used by the network device to determine at least one beam pair from among the plurality of beams, the at least one beam pair is used for supporting uplink multi-panel and/or multi-transmission-and-reception-point (TRPs) transmission. Therefore, coordinated multiple point transmission under more scenarios can be supported, thereby effectively improving the uplink transmission throughput and the communication efficiency of a system, and improving the reliability of the transmission.

## Description

### FIELD

The present disclosure relates to the field of communication technologies, and more particularly to an uplink communication method and device, a communication device, a communication system and a storage medium.

### BACKGROUND

In order to improve coverage of a cell edge and provide a more balanced service quality in a service area, a coordinated multiple point transmission (CoMP) technology is still an important technical means in a new radio (NR) system. For example, cooperation among multiple transmission and reception points (TRPs) or panels may be used for transmission/reception via multiple beams from multiple angles.

In the related art, transmission enhancement based on multi-panel terminals and/or multiple TRPs is considered for a physical uplink shared channel (PUSCH)/physical uplink control channel (PUCCH).

### SUMMARY

Embodiments of a first aspect of the present disclosure provides an uplink communication method, which is performed by a terminal, and includes: receiving first information sent by a network device, where the first information is used to configure the terminal to perform channel state information (CSI) measurement and beam reporting; and sending second information to the network device based on the first information. The second information indicates a plurality of beams, the second information is configured for the network device to determine at least one beam pair from the plurality of beams, and the at least one beam pair is configured to support uplink multi-panel and/or multi-transmission and reception point (TRP) transmission.

Embodiments of a second aspect of the present disclosure provides an uplink communication method, which is performed by a network device, and includes: sending first information to a terminal, where the first information is used to configure the terminal to perform channel state information (CSI) measurement and beam reporting; receiving second information sent by the terminal, where the second information is sent by the terminal based on the first information, and the second information indicates a plurality of beams; and determining at least one beam pair from the plurality of beams based on the second information, where the at least one beam pair is configured to support uplink multi-panel and/or multi-transmission and reception point (TRP) transmission.

Embodiments of a third aspect of the present disclosure proposes a terminal, which includes: a transceiver module configured to: receive first information sent by a network device, where the first information is used to configure the terminal to perform channel state information (CSI) measurement and beam reporting; and send second information to the network device based on the first information. The second information indicates a plurality of beams, the second information is configured for the network device to determine at least one beam pair from the plurality of beams, and the at least one beam pair is configured to support uplink multi-panel and/or multi-transmission and reception point (TRP) transmission.

Embodiments of a fourth aspect of the present disclosure proposes a network device, which includes: a transceiver module configured to: send first information to a terminal, where the first information is used to configure the terminal to perform channel state information (CSI) measurement and beam reporting; and receive second information sent by the terminal, where the second information is sent by the terminal based on the first information, and the second information indicates a plurality of beams; and a processing module configured to determine at least one beam pair from the plurality of beams based on the second information, where the at least one beam pair is configured to support uplink multi-panel and/or multi-transmission and reception point (TRP) transmission.

According to the scheme proposed by the embodiments of the present disclosure, the first information sent by the network device is received, the first information is used to configure the terminal to perform the CSI measurement and beam reporting, and based on the first information, the second information is sent to the network device. The second information indicates the plurality of beams, and the second information is configured for the network device to determine the at least one beam pair from the plurality of beams. The at least one beam pair is configured to support the uplink multi-panel and/or multi-transmission and reception point (TRP) transmission, which may support coordinated multiple point transmission in more scenarios, thus effectively improving the uplink transmission throughput and communication efficiency of the system and improving the transmission reliability.

### BRIEF DESCRIPTION OF THE DRAWINGS

In order to more clearly explain the technical scheme in embodiments of the present disclosure or in the related art, the drawings needed in the embodiments of the present disclosure or in the related art will be explained below.
Fig. 1A is a schematic architecture diagram of a communication system provided by an embodiment of the present disclosure.
Fig. 1B is a schematic diagram of multi-panel/TRP transmission provided by an embodiment of the present disclosure.
Fig. 1C is another schematic diagram of multi-panel/TRP transmission provided by an embodiment of the present disclosure.
Fig. 1D is another schematic diagram of multi-panel/TRP transmission provided by an embodiment of the present disclosure.
Fig. 1E is another schematic diagram of multi-panel/TRP transmission provided by an embodiment of the present disclosure.
Fig. 2 is a schematic interaction diagram of an uplink communication method provided by an embodiment of the present disclosure.
Fig. 3A is a flowchart of an uplink communication method provided by an embodiment of the present disclosure.
Fig. 3B is a flowchart of an uplink communication method provided by an embodiment of the present disclosure.
Fig. 3C is a flowchart of an uplink communication method provided by an embodiment of the present disclosure.
Fig. 3D is a flowchart of an uplink communication method provided by an embodiment of the present disclosure.
Fig. 4A is a flowchart of an uplink communication method provided by an embodiment of the present disclosure.
Fig. 4B is a flowchart of an uplink communication method provided by an embodiment of the present disclosure.
Fig. 4C is a flowchart of an uplink communication method provided by an embodiment of the present disclosure.
Fig. 4D is a flowchart of an uplink communication method provided by an embodiment of the present disclosure.
Fig. 5 is a flowchart of an uplink communication method provided by an embodiment of the present disclosure.
Fig. 6A is a schematic diagram of a terminal provided by an embodiment of the present disclosure.
Fig. 6B is a schematic diagram of a network device provided by an embodiment of the present disclosure.
Fig. 7A is a schematic diagram of a communication device provided by an embodiment of the present disclosure.
Fig. 7B is a schematic diagram of a chip provided by an embodiment of the present disclosure.

### DETAILED DESCRIPTION

Embodiments of the present disclosure provide an uplink communication method and device, a communication device, a communication system and a storage medium.

In a first aspect, embodiments of the present disclosure propose an uplink communication method, which is performed by a terminal, and includes: receiving first information sent by a network device, where the first information is used to configure the terminal to perform channel state information (CSI) measurement and beam reporting; and sending second information to the network device based on the first information, where the second information indicates a plurality of beams, the second information is configured for the network device to determine at least one beam pair from the plurality of beams, and the at least one beam pair is configured to support uplink multi-panel and/or multi-transmission and reception point (TRP) transmission.

In the above embodiments, the terminal may support coordinated multiple point transmission in more scenarios, which effectively improves the uplink transmission throughput and communication efficiency of the system and improves the transmission reliability.

In combination with some embodiments of the first aspect, in some embodiments, each beam pair of the at least one beam pair is configured for uplink non-simultaneous transmission, or for uplink multi-panel single-TRP simultaneous transmission.

In the above embodiments, the terminal may support beam reporting in the scenario of uplink non-simultaneous transmission or uplink multi-panel single-TRP simultaneous transmission, which effectively improves the uplink transmission throughput and communication efficiency of the system and improves the transmission reliability.

In combination with some embodiments of the first aspect, in some embodiments, the first information is used to configure the terminal to perform the CSI measurement and beam reporting based on grouped downlink beams; and the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a different TRP, or each beam of each beam pair of the at least one beam pair corresponds to a different quasi-co-location (QCL) relationship.

In the above embodiments, the terminal may support the beam reporting in the uplink non-simultaneous transmission scenario, and the beam may also be used in the downlink simultaneous transmission scenario, thus saving signaling resources, effectively improving the uplink transmission throughput and communication efficiency of the system, and improving the transmission reliability.

In combination with some embodiments of the first aspect, in some embodiments, the first information is used to configure the terminal to perform the CSI measurement and beam reporting based on grouped downlink beams; and the second information indicates the at least one beam pair, and each beam pair of the at least one beam pair is configured for uplink non-simultaneous transmission of the terminal. Each beam of each beam pair of the at least one beam pair corresponds to a different TRP, or each beam of each beam pair of the at least one beam pair corresponds to a different QCL relationship.

In the above embodiments, the terminal may support the beam reporting in the uplink non-simultaneous transmission scenario, thus effectively improving the uplink transmission throughput and communication efficiency of the system and improving the transmission reliability.

In combination with some embodiments of the first aspect, in some embodiments, the first information is used to configure the terminal to perform the CSI measurement and beam reporting based on non-grouped downlink beams; and the second information indicates the plurality of beams, and any two beams of the plurality of beams are configured for uplink multi-TRP non-simultaneous transmission of the terminal. Each beam of the any two beams corresponds to a different TRP, or each beam of the any two beams corresponds to a different QCL relationship.

In the above embodiments, the terminal may support the beam reporting in the uplink non-simultaneous transmission scenario, and the mode is flexible, thus effectively improving the uplink transmission throughput and communication efficiency of the system and improving the transmission reliability.

In combination with some embodiments of the first aspect, in some embodiments, the first information is used to configure the terminal to perform the CSI measurement and beam reporting based on grouped downlink beams; and the second information indicates the at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a same TRP.

In the above embodiments, the terminal may support the beam reporting in the uplink multi-panel single-TRP simultaneous transmission scenario, and the beam may also be used in the downlink simultaneous transmission scenario, thus saving signaling resources, effectively improving the uplink transmission throughput and communication efficiency of the system, and improving the transmission reliability.

In combination with some embodiments of the first aspect, in some embodiments, the first information is used to configure the terminal to perform the CSI measurement and beam reporting based on grouped downlink beams; and the second information indicates the at least one beam pair, and each beam pair of the at least one beam pair is configured for uplink multi-panel single-TRP simultaneous transmission of the terminal. Each beam of each beam pair of the at least one beam pair corresponds to a same TRP.

In the above embodiments, the terminal may support the beam reporting in the uplink multi-panel single-TRP simultaneous transmission scenario, thus effectively improving the uplink transmission throughput and communication efficiency of the system and improving the transmission reliability.

In combination with some embodiments of the first aspect, in some embodiments, the first information is also used to indicate a numeric count of the plurality of beams indicated by the second information.

In the above embodiments, the terminal may perform the beam reporting based on the configuration of the network, thus saving signaling resources.

In combination with some embodiments of the first aspect, in some embodiments, the second information includes at least one of the following information: at least one channel state information reference signal resource indicator (CRI) indicating the beam; at least one synchronization signal and physical broadcast channel block resource indicator (SSBRI) indicating the beam; a reference signal receiving power (RSRP) corresponding to each beam; and a signal to interference plus noise ratio (SINR) corresponding to each beam.

In the above embodiments, the terminal may determine the reporting quantity of the beam reporting based on the configuration of the network, and also report beam indication and beam quality information, thus facilitating the network to determine the beam for uplink transmission based on the reported beam.

In combination with some embodiments of the first aspect, in some embodiments, the second information further includes third information, and the third information is configured to indicate capability information of a panel of at least one terminal.

In the above embodiments, the terminal may report the capability information of at least one panel that is included by the terminal itself, so that the network may select the panel for uplink transmission and the beam corresponding to the panel based on the capability of the panel, thus effectively improving the efficiency and quality of uplink transmission.

In combination with some embodiments of the first aspect, in some embodiments, the method further includes: sending fourth information to the network device, where the fourth information indicates CSI measurement and beam reporting supported by the terminal, and the fourth information is configured for the network device to determine the first information.

In the above embodiments, the terminal may report the beam reporting mode supported by the terminal itself, so that the network may configure the beam reporting quantity to the terminal based on the mode supported by the terminal, thus saving signaling resources and improving the communication efficiency of the system.

In a second aspect, embodiments of the present disclosure propose an uplink communication method, which is performed by a network device, and includes: sending first information to a terminal, where the first information is used to configure the terminal to perform channel state information (CSI) measurement and beam reporting; receiving second information sent by the terminal, where the second information is sent by the terminal based on the first information, and the second information indicates a plurality of beams; and determining at least one beam pair from the plurality of beams based on the second information, where the at least one beam pair is configured to support uplink multi-panel and/or multi-transmission and reception point (TRP) transmission.

In the above embodiments, the terminal may support coordinated multiple point transmission in more scenarios, thus effectively improving the uplink transmission throughput and communication efficiency of the system and improving the transmission reliability.

In combination with some embodiments of the second aspect, in some embodiments, each beam pair of the at least one beam pair is configured for uplink non-simultaneous transmission, or for uplink multi-panel single-TRP simultaneous transmission.

In combination with some embodiments of the second aspect, in some embodiments, the first information is used to configure the terminal to perform the CSI measurement and beam reporting based on grouped downlink beams; and the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a different TRP, or each beam of each beam pair of the at least one beam pair corresponds to a different QCL relationship.

In combination with some embodiments of the second aspect, in some embodiments, the first information is used to configure the terminal to perform the CSI measurement and beam reporting based on grouped downlink beams; and the second information indicates the at least one beam pair, and each beam pair of the at least one beam pair is configured for uplink non-simultaneous transmission of the terminal. Each beam of each beam pair of the at least one beam pair corresponds to a different TRP, or each beam of each beam pair of the at least one beam pair corresponds to a different QCL relationship.

In combination with some embodiments of the second aspect, in some embodiments, the first information is used to configure the terminal to perform the CSI measurement and beam reporting based on non-grouped downlink beams; and the second information indicates the plurality of beams, and any two beams of the plurality of beams are configured for uplink multi-TRP non-simultaneous transmission of the terminal. Each beam of the any two beams corresponds to a different TRP, or each beam of the any two beams corresponds to a different QCL relationship.

In combination with some embodiments of the second aspect, in some embodiments, the first information is used to configure the terminal to perform the CSI measurement and beam reporting based on grouped downlink beams; and the second information indicates at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a same TRP.

In combination with some embodiments of the second aspect, in some embodiments, the first information is used to configure the terminal to perform the CSI measurement and beam reporting based on grouped downlink beams; and the second information indicates the at least one beam pair, and each beam pair of the at least one beam pair is configured for uplink multi-panel single-TRP simultaneous transmission of the terminal. Each beam of each beam pair of the at least one beam pair corresponds to a same TRP.

In combination with some embodiments of the second aspect, in some embodiments, the first information is further configured to indicate a numeric count of the plurality of beams indicated by the second information.

In combination with some embodiments of the second aspect, in some embodiments, the second information includes at least one of the following information: at least one channel state information reference signal resource indicator (CRI) indicating the beam; at least one synchronization signal and physical broadcast channel block resource indicator (SSBRI) indicating the beam; a reference signal receiving power (RSRP) corresponding to each beam; and a signal to interference plus noise ratio (SINR) corresponding to each beam.

In combination with some embodiments of the second aspect, in some embodiments, the second information further includes third information, and the third information indicates capability information of a panel of at least one terminal.

In combination with some embodiments of the second aspect, in some embodiments, the method further includes: receiving fourth information sent by the terminal, where the fourth information indicates CSI measurement and beam reporting supported by the terminal; and determining the first information according to the fourth information.

In a third aspect, embodiments of the present disclosure provide an uplink communication method, which includes: sending by a network device first information to a terminal, where the first information is used to configure the terminal to perform channel state information (CSI) measurement and beam reporting; sending by the terminal second information to the network device based on the first information, where the second information indicates a plurality of beams; and determining by the network device at least one beam pair from the plurality of beams based on the second information, where the at least one beam pair is configured to support uplink multi-panel and/or multi-transmission and reception point (TRP) transmission.

In combination with some embodiments of the third aspect, in some embodiments, each beam pair of the at least one beam pair is configured for uplink non-simultaneous transmission, or for uplink multi-panel single-TRP simultaneous transmission.

In combination with some embodiments of the third aspect, in some embodiments, the first information is used to configure the terminal to perform the CSI measurement and beam reporting based on grouped downlink beams; and the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a different TRP, or each beam of each beam pair of the at least one beam pair corresponds to a different QCL relationship.

In combination with some embodiments of the third aspect, in some embodiments, the first information is used to configure the terminal to perform the CSI measurement and beam reporting based on grouped downlink beams; and the second information indicates the at least one beam pair, and each beam pair of the at least one beam pair is configured for uplink non-simultaneous transmission of the terminal. Each beam of each beam pair of the at least one beam pair corresponds to a different TRP, or each beam of each beam pair of the at least one beam pair corresponds to a different QCL relationship.

In combination with some embodiments of the third aspect, in some embodiments, the first information is used to configure the terminal to perform the CSI measurement and beam reporting based on non-grouped downlink beams; and the second information indicates the plurality of beams, and any two beams of the plurality of beams are configured for uplink multi-TRP non-simultaneous transmission of the terminal. Each beam of the any two beams corresponds to a different TRP, or each beam of the any two beams corresponds to a different QCL relationship.

In combination with some embodiments of the third aspect, in some embodiments, the first information is used to configure the terminal to perform the CSI measurement and beam reporting based on grouped downlink beams; and the second information indicates the at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs. Each beam of each beam pair of the at least one beam pair corresponds to a same TRP.

In combination with some embodiments of the third aspect, in some embodiments, the first information is used to configure the terminal to perform the CSI measurement and beam reporting based on grouped downlink beams; and the second information indicates the at least one beam pair, and each beam pair of the at least one beam pair is configured for uplink multi-panel single-TRP simultaneous transmission of the terminal. Each beam of each beam pair of the at least one beam pair corresponds to a same TRP.

In combination with some embodiments of the third aspect, in some embodiments, the first information is further configured to indicate a numeric count of the plurality of beams indicated by the second information.

In combination with some embodiments of the third aspect, in some embodiments, the second information includes at least one of the following information: at least one channel state information reference signal resource indicator (CRI) indicating the beam; at least one synchronization signal and physical broadcast channel block resource indicator (SSBRI) indicating the beam; a reference signal receiving power (RSRP) corresponding to each beam; and a signal to interference plus noise ratio (SINR) corresponding to each beam.

In combination with some embodiments of the third aspect, in some embodiments, the second information further includes third information, and the third information indicates capability information of a panel of at least one terminal.

In combination with some embodiments of the third aspect, in some embodiments, the method further includes: sending by the terminal fourth information to the network device, where the fourth information indicates CSI measurement and beam reporting supported by the terminal; and determining by the network device the first information according to the fourth information.

In a fourth aspect, embodiments of the present disclosure propose a terminal, which includes at least one of a transceiver module and a processing module. The terminal is configured to execute the first aspect and the optional implementations of the first aspect.

In a fifth aspect, embodiments of the present disclosure provide a network device, which includes at least one of a transceiver module and a processing module. The network device is configured to execute the second aspect and the optional implementations of the second aspect.

In a sixth aspect, embodiments of the present disclosure propose a terminal, which includes one or more processors. The terminal is configured to execute the first aspect and the optional implementations of the first aspect.

In a seventh aspect, embodiments of the present disclosure propose a network device, which includes one or more processors. The network device is configured to execute the second aspect and the optional implementation of the second aspect.

In an eighth aspect, embodiments of the present disclosure propose a communication system, which includes a terminal and a network device. The terminal is configured to perform the method according to the first aspect and the optional implementations of the first aspect, and the network device is configured to perform the method according to the second aspect and the optional implementations of the second aspect.

In a ninth aspect, embodiments of the present disclosure propose a storage medium, for storing instructions which, when executed on a communication device, cause the communication device to perform the method according to the first aspect and the optional implementations of the first aspect, or the method according to the second aspect and the optional implementations of the second aspect.

In a tenth aspect, embodiments of the present disclosure propose a program product, which, when executed by a communication device, causes the communication device to perform the method according to the first aspect and the optional implementations of the first aspect, or the method according to the second aspect and the optional implementations of the second aspect.

In an eleventh aspect, embodiments of the present disclosure propose a computer program, which, when run on a computer, causes the computer to perform the method according to the first aspect and the optional implementations of the first aspect, or the method according to the second aspect and the optional implementations of the second aspect.

In a twelfth aspect, embodiments of the present disclosure provide a chip or a chip system. The chip or the chip system includes a processing circuit configured to perform the method according to the first aspect and the optional implementations of the first aspect, or the method according to the second aspect and the optional implementations of the second aspect.

It may be understood that the above terminal, network device, communication system, storage medium, program product, computer program, chip or chip system are all used to perform the methods proposed in the embodiments of the present disclosure. Therefore, the beneficial effects they may achieve correspond to the beneficial effects in the corresponding methods, and will not be repeated here.

The embodiments of the present disclosure provide an uplink communication method and device, a communication device, a communication system and a storage medium. In some embodiments, terms such as uplink communication method, information processing method, and communication method may be used interchangeably, terms such as uplink communication device, information processing device and communication device may be used interchangeably, and terms such as information processing system and communication system may be used interchangeably.

The embodiments of the present disclosure are not exhaustive, but only schematic illustrations of some embodiments, and are not taken as specific limitations on the protection scope of the present disclosure. Without contradiction, each step in an embodiment may be implemented as an independent embodiment, and various steps may be arbitrarily combined. For example, the scheme after removing some steps in an embodiment may also be implemented as an independent embodiment, and the orders of various steps in an embodiment may be arbitrarily exchanged. In addition, optional implementations in an embodiment may be arbitrarily combined. In addition, various embodiments may be arbitrarily combined, for example, some or all steps of different embodiments may be arbitrarily combined, and an embodiment may be arbitrarily combined with optional implementations of another embodiment.

In the embodiments of the present disclosure, unless there are special explanations and logical conflicts, the terms and/or descriptions among the embodiments are consistent and may be quoted from each other, and the technical features in different embodiments may be combined to form a new embodiment according to their inherent logical relations.

The terms used in the embodiments of the present disclosure are only for the purpose of describing specific embodiments, and are not used as limitations on the present disclosure.

In the embodiments of the present disclosure, unless otherwise stated, elements expressed in a singular form, such as "a", "an", "the", "said", "foregoing", "aforementioned", "preceding", "this", etc., may refer to "one and only one" or "one or more", "at least one", etc. For example, when an article such as "a", "an", or "the" is used in translation, the noun following the article may be understood as a singular expression or a plural expression.

In the embodiments of the present disclosure, "a/the plurality of" refers to two or more.

In some embodiments, terms such as "at least one of", "one or more", "a plurality of", "multiple", etc., may be used interchangeably.

In some embodiments, expressions such as "at least one of A and B", "A and/or B", "in a case, A, and in another case, B", "in response to a case, A, and in response to another case, B", etc., may include the following technical solutions depending on the situation: in some embodiments, A (performing A independently of B); in some embodiments, B (performing B independently of A); in some embodiments, selecting to perform A or B (performing A and B selectively); in some embodiments, both A and B (performing both A and B). When there are more branches such as A, B, C, etc., the above similarly applies.

In some embodiments, expressions such as "A or B" may include the following technical solutions depending on the situation: in some embodiments, A (performing A independently of B); in some embodiments, B (performing B independently of A); in some embodiments, selecting to perform A or B (performing A and B selectively). When there are more branches such as A, B, C, etc., the above similarly applies.

Prefix terms such as "first", "second", etc., in the embodiments of the present disclosure are only used to distinguish different described objects, and do not limit the position, order, priority, quantity, or content of the described objects. The description of the objects refers to the context of the claims or embodiments, and should not be construed as redundant limitations due to the use of the prefix terms. For example, if the described object is a "field", the ordinal numbers before "field" in a "first field" and a "second field" do not limit the position or order of the "fields", and "first" and "second" do not limit whether the "fields" they modify are in the same message, nor do they limit the sequence of the "first field" and the "second field". For another example, if the described object is a "level", the ordinal numbers before "level" in a "first level" and a "second level" do not limit the priority between the "levels". For another example, the quantity of the described objects is not limited by the ordinal numbers and may be one or more. Taking a "first device" as an example, the quantity of the "device" may be one or more. In addition, objects modified by different prefix terms may be the same or different. For example, if the described object is a "device", a "first device" and a "second device" may be the same device or different devices, and their types may be the same or different. For another example, if the described object is "information", "first information" and "second information" may be the same information or different information, and their content may be the same or different.

In some embodiments, "comprising A", "including A", "indicating A", and "carrying A" may be interpreted as directly carrying A or indirectly indicating A.

In some embodiments, terms such as "in response to...", "in response to determining...", "in a case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably; and terms such as "less than", "less than or equal to", "not greater than", "fewer than", "fewer than or equal to", "not more than", "lower than", "lower than or equal to", "not higher than", "below", etc., may be used interchangeably.

In some embodiments, terms such as "apparatus", etc., may be interpreted as physical or virtual, and their names are not limited to the names recorded in the embodiments. Terms such as "equipment", "device", "circuit", "network element", "node", "function", "unit", "section", "system", "network", "chip", "chip system", "entity", "subject", etc., may be used interchangeably.

In some embodiments, a "network" may be interpreted as a device included in a network, such as an access network device, a core network device, and the like.

In some embodiments, "access network device (AN device)" may also be called as "radio access network device (RAN device)", "base station (BS)", "radio base station", "fixed station", "node". In some embodiments, "access network device (AN device)" may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc.

In some embodiments, "terminal" or "terminal device" may be called as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc., may comply with the laws and regulations of the country where the obtainment takes place.

In some embodiments, data, information, etc., may be obtained with the user's consent.

In addition, each element, each row, or each column in tables of the embodiments of the present disclosure may be implemented as an independent embodiment, and any combination of any elements, any rows, or any columns may also be implemented as an independent embodiment.

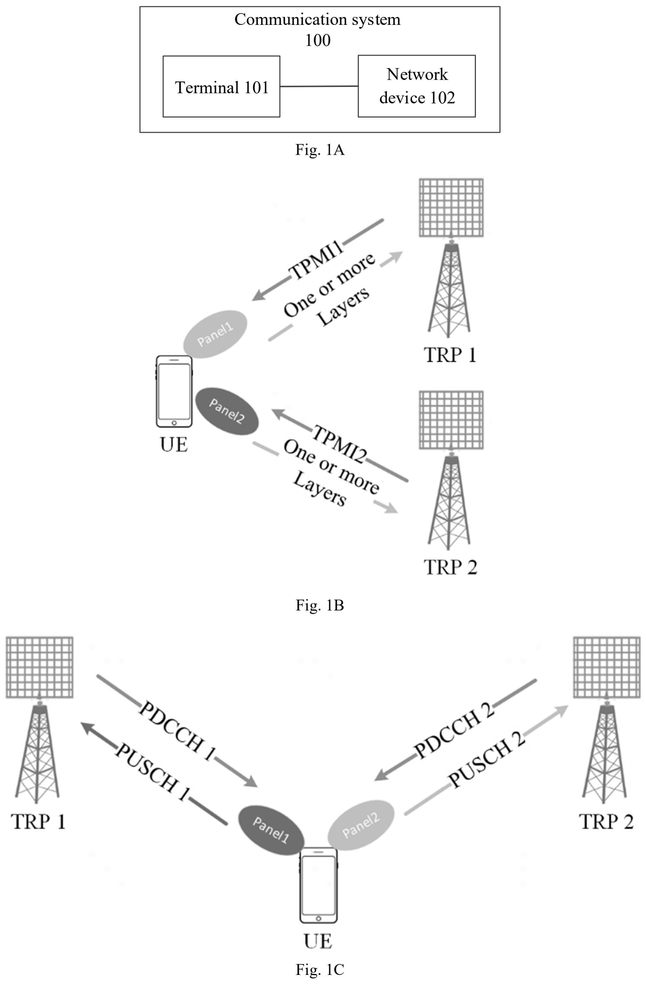

Fig. 1A is a schematic architecture diagram of a communication system according to an embodiment of the present disclosure.

As shown in Fig. 1A, a communication system 100 includes a terminal 101 and a network device 102.

In some embodiments, the terminal 101 includes, for example, at least one of a mobile phone, a wearable device, an Internet of Things device, a vehicle with a communication function, a smart vehicle, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city and a wireless terminal in smart home, but not limited thereto.

In some embodiments, the network device 102 includes, for example, at least one of a node or device that connects a terminal to a wireless network, and the network device may include an evolved node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems and an access node in a Wi-Fi system, but not limited thereto.

In some embodiments, the technical scheme of the present disclosure may be applied to the Open RAN architecture. In this time, the interfaces between access network devices or within access network devices involved in the embodiments of the present disclosure may become internal interfaces of the Open RAN, and the procedure and information interaction between these internal interfaces may be realized by software or programs.

In some embodiments, the network device may be composed of a central unit (CU) and a distributed unit (DU), in which the CU may also be called a control unit. The protocol layers of the access network device may be separated by adopting the CU-DU structure. The functions of some protocol layers are centrally controlled by the CU, while the functions of some or all of remaining protocol layers are distributed in the DU, and the DU is centrally controlled by the CU, however the present disclosure is not limited to this.

It may be understood that the communication system described in the embodiments of the present disclosure is for more clearly explaining the technical scheme of the embodiments of the present disclosure, and does not constitute a limitation on the technical scheme proposed in the embodiments of the present disclosure. It is known by those ordinary skilled in the related art that with the evolution of the system architecture and the emergence of new business scenarios, the technical scheme proposed in the embodiments of the present disclosure is also applicable to similar technical problems.

The following embodiments of the present disclosure may be applied to the communication system 100 shown in Fig. 1A, or some entities thereof, but are not limited thereto. The entities shown in Fig. 1A are examples, and the communication system may include all or part of the entities in Fig. 1A, or other entities except the entities in Fig. 1A. The number and form of the entities are arbitrary, and the entities may be physical or virtual. The connection relationship between the entities is illustrative, the entities may not be connected or may be connected, and the connection may be in any way, for example, direct or indirect, wired or wireless.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network, PLMN) network, Device-to-Device (D2D) system, machine-to-machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A with 5G) for application.

In order to improve coverage of a cell edge and provide a more balanced service quality in a service area, a coordinated multiple point transmission (CoMP) technology is still an important technical means in a new radio (NR) system. For example, cooperation among multiple transmission and reception points (TRPs) or panels may be used for transmission/reception via multiple beams from multiple angles.

In the related art, transmission enhancement based on multi-panel terminals and/or multiple TRPs is considered for a physical uplink shared channel (PUSCH)/physical uplink control channel (PUCCH).

In some embodiments, the uplink PUSCH transmission may be transmitted to multiple TRPs of the base station. For example, in the coordinated transmission in a time division multiplexing (TDM) transmission mode, different repetitions of the same information on the PUSCH may be sent to different TRPs of the base station in a time-dividing manner through different transmission occasions (TOs) in the time domain. This method has low requirements on the terminal capability, does not require the capability to support simultaneous beam transmission, and has a long transmission delay.

For the uplink, with respect to PUSCH channels oriented at different TRPs, the spatial characteristics of the actual experienced propagation channels may differ substantially, and thus it is considered that D-type quasi co-location (QCL TypeD/QCL-D, where QCL is short for quasi co-location) of PUSCH channels in different transmission directions is different.

In some embodiments, the simultaneous coordinated transmission to multiple TRPs of the base station through multiple terminal panels is used to increase the reliability and throughput of transmission, and also, the transmission delay under multiple TRPs may be effectively reduced, however the terminal is required to have the capability to simultaneously transmit multiple beams. Optionally, the transmission of the PUSCH may be based on multi-panel/TRP transmission scheduled by a single physical downlink control channel (PDCCH), that is, a single downlink control information (S-DCI, where DCI is short for downlink control information), as shown in Fig. 1B. Optionally, the transmission of the PUSCH may also be based on multi-panel/TRP transmission scheduled by different PDCCHs, that is, multiple DCI (M-DCI), as shown in Fig. 1C.

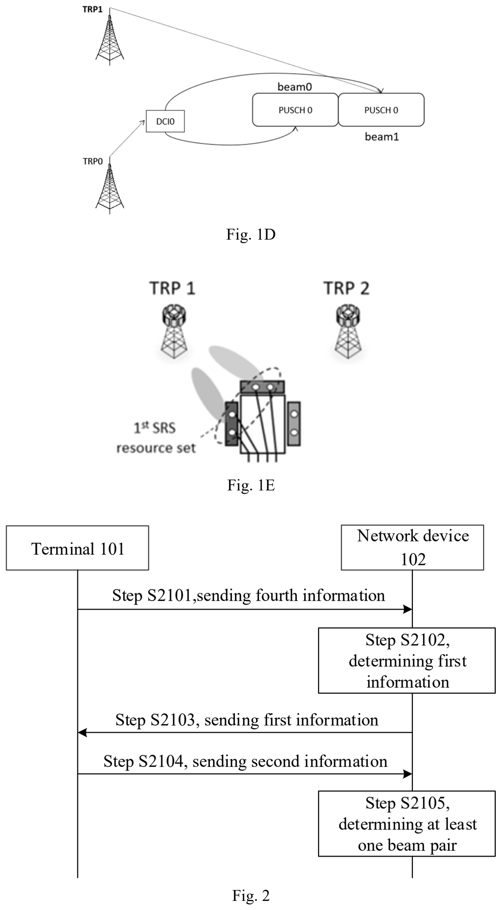

In some embodiments, the transmission of the PUSCH may be based on uplink non-simultaneous (TDM) transmission scheduled by S-DCI, as shown in Fig. 1D; and the transmission of the PUSCH may also be based on uplink multi-panel single-TRP simultaneous transmission, as shown in Fig. 1E.

In some embodiments, the terminal is generally configured with multiple physical panels, and capabilities of different panels may be different. For example, different panels have different numeric counts of sounding reference signal (SRS) ports, and maximum data transmission layer numbers different panels support are not necessarily the same. For example, one panel supports transmission of at most two layers, and the other panel supports transmission of at most four layers. A network scheduler may judge whether the terminal is currently suitable for uplink simultaneous transmission of multiple panels. If the terminal is currently suitable for uplink simultaneous transmission (simultaneous scheduling) of multiple panels, the network will directly or indirectly indicate relevant transmission parameters, including specific beam indication information of the terminal, a numeric count of data layers used for transmission, an allocation situation of used demodulation reference signal (DMRS) ports, and precoding indication information.

In some embodiments, in order to support uplink panel selection, an enhanced beam reporting scheme is supported, that is, a function of notifying the panel selected for uplink transmission to the terminal by updating an UL TCI state. Optionally, a UE capability value set that may be used for uplink transmission is defined for a multi-panel terminal, and the terminal reports the set. An element in the set includes a maximum SRS port number supported by each panel of the terminal, where it is assumed that the maximum SRS port number corresponds to a supported maximum uplink transmission rank, and the terminal has four panels. If the maximum SRS port numbers supported by the four panels are 1, 2, 2 and 4 respectively, the maximum SRS port numbers corresponding to heterogeneous panels are reported, and the UE capability set is reported as {1, 2, 4}.

Next, the uplink communication method and device provided by the present disclosure will be introduced in detail with reference to the accompanying drawings.

Fig. 2 is a schematic interaction diagram of an uplink communication method according to an embodiment of the present disclosure. As shown in Fig. 2, the uplink communication method according to the embodiment of the present disclosure includes the following steps.

In step S2101, a terminal 101 sends fourth information to a network device 102.

In some embodiments, the network device 102 receives the fourth information sent by the terminal 101.

In some embodiments, the fourth information indicates modes of channel state information (CSI) measurement and beam reporting supported by the terminal 101.

Optionally, the modes of CSI measurement and beam reporting may include at least one of:
CSI measurement and beam reporting performed based on grouped downlink beams (group-based beam reporting); or
CSI measurement and beam reporting performed based on non-grouped downlink beams (non group-based beam reporting).

In some embodiments, the name of the fourth information is not limited, and it is, for example, "beam reporting capability information", "terminal capability information", "capability reporting information", and so on.

In some embodiments, step S2101 may be omitted, and the network device 102 may independently realize the function indicated by the fourth information, for example, the capability information of the terminal may not be obtained through terminal reporting, or the above function is default.

In step S2102, the network device 102 determines first information.

In some embodiments, the network device 102 may determine the first information based on the received fourth information.

In some embodiments, the network device 102 may determine the first information to be sent to the terminal 101 based on the modes of CSI measurement and beam reporting supported by the terminal 101.

In some embodiments, the first information is used to configure the terminal 101 to perform the channel state information (CSI) measurement and beam reporting.

In some embodiments, the first information is used to configure the terminal 101 to perform the CSI measurement and beam reporting based on grouped downlink beams.

In some embodiments, the first information is used to configure the terminal 101 to perform the CSI measurement and beam reporting based on non-grouped downlink beams.

In some embodiments, the first information is used for the terminal 101 to send second information to the network device 102 based on the configuration of the first information.

In some embodiments, the name of the first information is not limited, and it is, for example, "configuration information", "measurement configuration information", "beam measurement and reporting configuration", and so on.

In some embodiments, the first information further indicates a numeric count of a plurality of beams indicated by the second information.

In some embodiments, the first information includes at least one of a CSI reporting quantity, a numeric count of beams, and a time-frequency resource occupied by reporting.

In step S2103, the network device 102 sends the first information to the terminal 101.

In some embodiments, the terminal 101 receives the first information sent by the network device 102.

In some embodiments, the first information is used to configure the terminal 101 to perform the channel state information (CSI) measurement and beam reporting.

In some embodiments, the first information is used to configure the terminal 101 to perform the CSI measurement and beam reporting based on grouped downlink beams.

In some embodiments, the first information is used to configure the terminal 101 to perform the CSI measurement and beam reporting based on non-grouped downlink beams.

In some embodiments, the first information is used for the terminal 101 to send the second information to the network device 102 based on the configuration of the first information.

In step S2104, the terminal 101 sends the second information to the network device 102.

In some embodiments, the network device 102 receives the second information sent by the terminal 101.

In some embodiments, the terminal 101 sends the second information to the network device 102 based on the received first information.

In some embodiments, the second information indicates a plurality of beams.

In some embodiments, the terminal 101 determines a numeric count of the plurality of beams indicated by the second information based on the first information.

In some embodiments, the second information is used for the network device 102 to determine at least one beam pair from the plurality of beams indicated by the second information, and the at least one beam pair is used to support uplink multi-panel and/or multi-transmission and reception point (TRP) transmission.

In some embodiments, the first information is used to configure the terminal 101 to perform the CSI measurement and beam reporting based on the grouped downlink beams, the terminal 101 sends the second information to the network device 102 based on the first information, the second information indicates the at least one beam pair, and each beam pair of the at least one beam pair is used for uplink non-simultaneous transmission of the terminal 101 (as shown in Fig. 1D), and each beam pair of the at least one beam pair is further used for the terminal 101 to simultaneously receive downlink channels or signals sent by a plurality of TRPs. Each beam of each beam pair of the at least one beam pair corresponds to a different TRP, or each beam of each beam pair of the at least one beam pair corresponds to a different QCL relationship.

Optionally, the terminal 101 may be a single-panel terminal or a multi-panel terminal.

In some embodiments, the first information is used to configure the terminal 101 to perform the CSI measurement and beam reporting based on the grouped downlink beams, the terminal 101 sends the second information to the network device 102 based on the first information, the second information indicates the at least one beam pair, and each beam pair of the at least one beam pair is used for uplink non-simultaneous transmission of the terminal 101 (as shown in Fig. 1D). Each beam of each beam pair of the at least one beam pair corresponds to a different TRP, or each beam of each beam pair of the at least one beam pair corresponds to a different QCL relationship.

Optionally, the terminal 101 may be a single-panel terminal or a multi-panel terminal.

In some embodiments, the first information is used to configure the terminal 101 to perform the CSI measurement and beam reporting based on the non-grouped downlink beams, the terminal 101 sends the second information to the network device 102 based on the first information, the second information indicates the plurality of beams, and any two beams of the plurality of beams are used for uplink multi-TRP non-simultaneous transmission of the terminal 101 (as shown in Fig. 1D). Each beam of the any two beams corresponds to a different TRP, or each beam of the any two beams corresponds to a different QCL relationship.

Optionally, the terminal 101 may be a single-panel terminal or a multi-panel terminal.

In some embodiments, the first information is used to configure the terminal 101 to perform the CSI measurement and beam reporting based on the grouped downlink beams, the second information indicates the at least one beam pair, each beam pair of the at least one beam pair is used for uplink multi-panel single-TRP simultaneous transmission of the terminal 101 (as shown in Fig. 1E), and each beam pair of the at least one beam pair is further used for the terminal to simultaneously receive downlink channels or signals sent by a plurality of TRPs. Each beam of each beam pair of the at least one beam pair corresponds to a same TRP.

In some embodiments, the first information is used to configure the terminal 101 to perform the CSI measurement and beam reporting based on the grouped downlink beams, the second information indicates at least one beam pair, and each beam pair of the at least one beam pair is used for uplink multi-panel single-TRP simultaneous transmission of the terminal 101 (as shown in Fig. 1E). Each beam of each beam pair of the at least one beam pair corresponds to a same TRP.

In some embodiments, the second information includes at least one of the following information: at least one channel state information reference signal resource indicator (CSI reference signal resource indicator, CRI) indicating the beam; at least one synchronization signal and physical broadcast channel block resource indicator (synchronization signal and PBCH block resource indicator, SSBRI, where PBCH is short for physical broadcast channel) indicating the beam; a reference signal receiving power (RSRP) corresponding to each beam; and a signal to interference plus noise ratio (SINR) corresponding to each beam.

Optionally, the second information may include CRI+RSRP, or the second information may include CRI+SINR, or the second information may include SSBRI+RSRP, or the second information may include SSBRI+SINR.

In some embodiments, the second information further includes third information, and the third information indicates capability information of a panel of at least one terminal.

Optionally, the terminal 101 only supports indication of different panel capabilities, the terminal 101 may report the third information for each beam indicated by the second information, and the third information indicates different panel capabilities.

Optionally, the terminal 101 supports indication containing the same panel capability, the terminal 101 may report the third information for each beam indicated by the second information or the terminal 101 may report the third information for each beam pair indicated by the second information, and a terminal panel capability indicated by the third information may contain the same panel capability.

Optionally, the terminal 101 does not support panel capability indication, and the second information does not include the third information.

In step S2105, the network device 102 determines at least one beam pair.

In some embodiments, based on the received second information, the network device 102 determines the at least one beam pair from the plurality of beams indicated by the second information, and the at least one beam pair is used to support uplink multi-panel and/or multi-transmission and reception point (TRP) transmission.

In some embodiments, each beam pair of the at least one beam pair is used for uplink non-simultaneous transmission (as shown in Fig. 1D), or for uplink multi-panel single-TRP simultaneous transmission (as shown in Fig. 1E).

In some embodiments, the second information indicates the at least one beam pair, each beam pair of the at least one beam pair is used for uplink non-simultaneous transmission of the terminal 101, and each beam pair of the at least one beam pair is further used for the terminal 101 to simultaneously receive multiple downlink channels or signals sent by a plurality of TRPs. each beam of each beam pair of the at least one beam pair corresponds to a different TRP, or each beam of each beam pair of the at least one beam pair corresponds to a different QCL relationship.

In some embodiments, the second information is used to indicate the at least one beam pair, and each beam pair of the at least one beam pair is used for uplink non-simultaneous transmission of the terminal 101. Each beam of each beam pair of the at least one beam pair corresponds to a different TRP, or each beam of each beam pair of the at least one beam pair corresponds to a different QCL relationship.

In some embodiments, the second information indicates the plurality of beams, and any two beams of the plurality of beams are used for uplink multi-TRP non-simultaneous transmission of the terminal 101. Each of the any two beams corresponds to a different TRP, or each of the any two beams corresponds to a different QCL relationship.

In some embodiments, the second information indicates the at least one beam pair, each beam pair of the at least one beam pair is used for uplink multi-panel single-TRP simultaneous transmission of the terminal 101, and each beam pair of the at least one beam pair is further used for the terminal to simultaneously receive downlink channels or signals sent by a plurality of TRPs. Each beam of each beam pair of the at least one beam pair corresponds to a same TRP.

In some embodiments, the second information indicates the at least one beam pair, and each beam pair of the at least one beam pair is used for uplink multi-panel single-TRP simultaneous transmission of the terminal 101. Each beam of each beam pair of the at least one beam pair corresponds to a same TRP.

In some embodiments, the names of information and the like are not limited to the names recorded in the embodiments, and "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, the names of information and the like are not limited to the names recorded in the embodiments, and "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, the terms "physical downlink shared channel (PDSCH)" and "DL data" may be used interchangeably, and the terms "physical uplink shared channel (PUSCH)" and "UL data" may be used interchangeably.

In some embodiments, the terms "radio", "wireless", "radio access network (RAN)", "access network (AN)" and "RAN-based" may be used interchangeably.

In some embodiments, the terms "resource block (RB)", "physical resource block (PRB)", "sub-carrier group (SCG)", "resource element group (REG)", "PRB pair", "RB pair", "resource element (RE)" and "sub-carrier" may be used interchangeably.

In some embodiments, the terms "frame", "radio frame", "subframe", "slot", "sub-slot", "mini-slot", "symbol" and "transmission time interval (TTI)" may be used interchangeably.

In some embodiments, the terms "obtain", "acquire", "gain", "receive", "transmit", "bidirectionally transmit", "transmit and/or receive" may be used interchangeably, which may be interpreted as receiving from another entity, obtaining from a protocol, obtaining from a higher layer, obtaining through self-processing, self-implementation, and other meanings.

In some embodiments, the terms "send", "emit", "report", "issue", "transmit", "bidirectionally transmit", "transmit and/or receive" may be used interchangeably.

The communication method according to the embodiment of the present disclosure may include at least one of step S2101 to step S2105. For example, step 2103 may be implemented as an independent embodiment, steps 2104+2105 may be implemented as an independent embodiment, steps 2103+2104+2105 may be implemented as an independent embodiment, steps 2101+2102 may be implemented as an independent embodiment, steps 2101+2102+2103 may be implemented as an independent embodiment, and steps 2101+2102+2103+2104+2105 may be implemented as an independent embodiment.

In some embodiments, steps 2101 and 2102 are optional, and one or more of these steps may be omitted or replaced in different embodiments.

In some embodiments, steps 2103, 2104 and 2105 are optional, and one or more of these steps may be omitted or replaced in different embodiments.

In some embodiments, reference may be made to other optional implementations described before or after the description corresponding to Fig. 2.

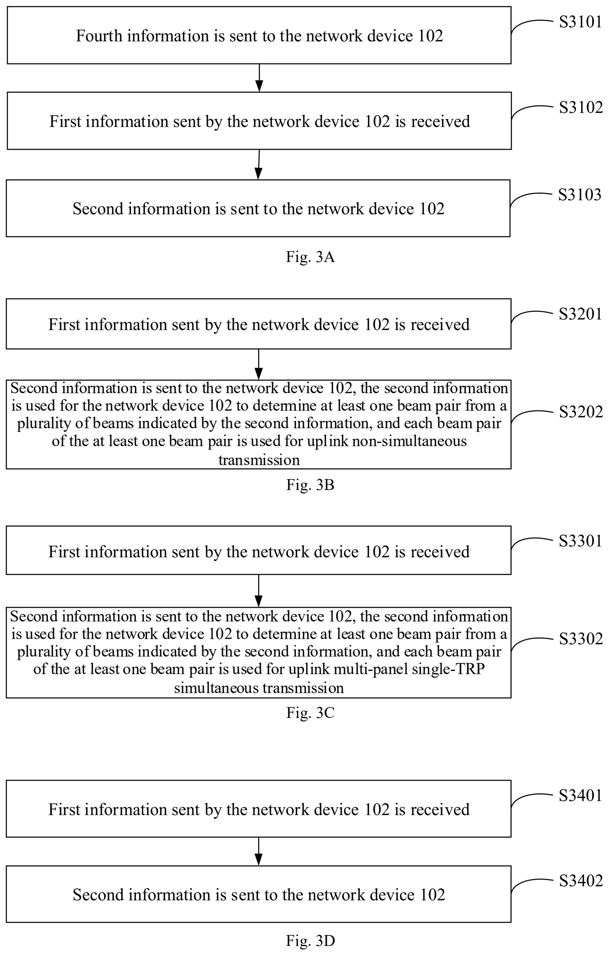

Fig. 3A is a flowchart of an uplink communication method according to an embodiment of the present disclosure. As shown in Fig. 3A, the uplink communication method according to the embodiment of the present disclosure is performed by the terminal 101, and includes the following steps.

In step S3101, fourth information is sent to the network device 102.

For optional implementations of step S3101, reference may be made to optional implementations of step S2101 in Fig. 2 and other associated parts in the embodiment involved in Fig. 2, which are not repeated here.

In some embodiments, the network device 102 sends the fourth information to the terminal 101, but the present disclosure is not limited to this, and the network device 102 may also send the fourth information to other entities.

Optionally, the fourth information indicates CSI measurement and beam reporting supported by the terminal 101, and the fourth information is used for the network device 102 to determine first information. For corresponding optional implementations, reference may be made to optional implementations of step S2102 in Fig. 2 and other associated parts in the embodiment involved in Fig. 2, which are not repeated here.

In step S3102, first information sent by the network device 102 is received.

For optional implementations of step S3102, reference may be made to optional implementations of step S2103 in Fig. 2 and other associated parts in the embodiment involved in Fig. 2, which are not repeated here.

In some embodiments, the terminal 101 receives the first information sent by the network device 102, but the present disclosure is not limited to this, and the terminal 101 may also receive the first information sent by another entity.

In step S3103, second information is sent to the network device 102.

For optional implementations of step S3103, reference may be made to optional implementations of step S2104 in Fig. 2 and other associated parts in the embodiment involved in Fig. 2, which are not repeated here.

Optionally, the second information indicates a plurality of beams, and the second information is used for the network device 102 to determine at least one beam pair from the plurality of beams indicated by the second information, and the at least one beam pair is used to support uplink multi-panel and/or multi-transmission and reception point (TRP) transmission. For corresponding optional implementations, reference may be made to optional implementations of step S2105 in Fig. 2 and other associated parts in the embodiment involved in Fig. 2, which are not repeated here.

The communication method according to the embodiment of the present disclosure may include at least one of steps S3101 to S3103. For example, step 3103 may be implemented as an independent embodiment, steps 3102+3103 may be implemented as an independent embodiment, step 3101 may be implemented as an independent embodiment, steps 3101+3102+3103 may be implemented as an independent embodiment, and so on, but the present disclosure is not limited to this.

In some embodiments, step S3101 is optional, and this step may be omitted or replaced in different embodiments.

Fig. 3B is a flowchart of an uplink communication method according to an embodiment of the present disclosure. As shown in Fig. 3B, the uplink communication method according to the embodiment of the present disclosure is performed by the terminal 101, and includes the following steps.

In step S3201, first information sent by the network device 102 is received.

For optional implementations of step S3201, reference may be made to optional implementations of step S2103 of Fig. 2 and step S3102 of Fig. 3A, and other associated parts in the embodiments involved in Figs. 2 and 3A, which are not repeated here.

In step S3202, second information is sent to the network device 102, the second information is used for the network device 102 to determine at least one beam pair from a plurality of beams indicated by the second information, and each beam pair of the at least one beam pair is used for uplink non-simultaneous transmission.

For optional implementations of step S3202, reference may be made to optional implementations of step S2104 in Fig. 2 and step S3103 in Fig. 3A, and other associated parts in the embodiments involved in Fig. 2 and Fig. 3A, which are not repeated here.

The communication method according to the embodiment of the present disclosure may include at least one of steps S3201 to S3202. For example, step 3202 may be implemented as an independent embodiment, step 3201 may be implemented as an independent embodiment, steps 3201+3202 may be implemented as an independent embodiment, and so on, but the present disclosure is not limited to this.

In some embodiments, step S3201 is optional, and this step may be omitted or replaced in different embodiments.

In some embodiments, step S3202 is optional, and this step may be omitted or replaced in different embodiments.

Fig. 3C is a flowchart of an uplink communication method according to an embodiment of the present disclosure. As shown in Fig. 3C, the uplink communication method according to the embodiment of the present disclosure is performed by the terminal 101, and includes the following steps.

In step S3301, first information sent by the network device 102 is received.

For optional implementations of step S3301, reference may be made to optional implementations of step S2103 in Fig. 2 and step S3102 in Fig. 3A, and other associated parts in the embodiments involved in Figs. 2 and 3A, which are not repeated here.

In some embodiments, the terminal 101 receives the first information sent by the network device 102, but the present disclosure is not limited to this, and the terminal 101 may also receive first information sent by another entity.

In step S3302, second information is sent to the network device 102, the second information is used for the network device 102 to determine at least one beam pair from a plurality of beams indicated by the second information, and each beam pair of the at least one beam pair is used for uplink multi-panel single-TRP simultaneous transmission.

For optional implementations of step S3302, reference may be made to optional implementations of step S2104 of Fig. 2 and step S3103 of Fig. 3A, and other associated parts in the embodiments involved in Figs. 2 and 3A, which are not repeated here.

The communication method according to the embodiment of the present disclosure may include at least one of steps S3301 to S3302. For example, step 3302 may be implemented as an independent embodiment, step 3301 may be implemented as an independent embodiment, steps 3301+3302 may be implemented as an independent embodiment, and so on, but the present disclosure is not limited to this.

In some embodiments, step S3301 is optional, and this step may be omitted or replaced in different embodiments.

In some embodiments, step S3302 is optional, and this step may be omitted or replaced in different embodiments.

Fig. 3D is a flowchart of an uplink communication method according to an embodiment of the present disclosure. As shown in Fig. 3D, the uplink communication method according to the embodiment of the present disclosure is performed by the terminal 101, and includes the following steps.

In step S3401, first information sent by the network device 102 is received.

For optional implementations of step S3401, reference may be made to optional implementations of step S2103 of Fig. 2, step S3102 of Fig. 3A, step S3201 of Fig. 3B, and step S3301 of Fig. 3C, and other associated parts in the embodiments involved in Fig. 2, Fig. 3A, Fig. 3B and Fig. 3C, which are not repeated here.

In step S3402, second information is sent to the network device 102.

For optional implementations of step S3402, reference may be made to optional implementations of step S2104 of Fig. 2, step S3103 of Fig. 3A, step S3202 of Fig. 3B, step S3302 of Fig. 3C, and other associated parts in the embodiments involved in Fig. 2, Fig. 3A, Fig. 3B and Fig. 3C, which are not described here.

The communication method according to the embodiment of the present disclosure may include at least one of steps S3401 to S3402. For example, step 3402 may be implemented as an independent embodiment, step 3401 may be implemented as an independent embodiment, steps 3401+3402 may be implemented as an independent embodiment, and so on, but the present disclosure is not limited to this.

In some embodiments, step S3401 is optional, and this step may be omitted or replaced in different embodiments.

In some embodiments, step S3402 is optional, and this step may be omitted or replaced in different embodiments.

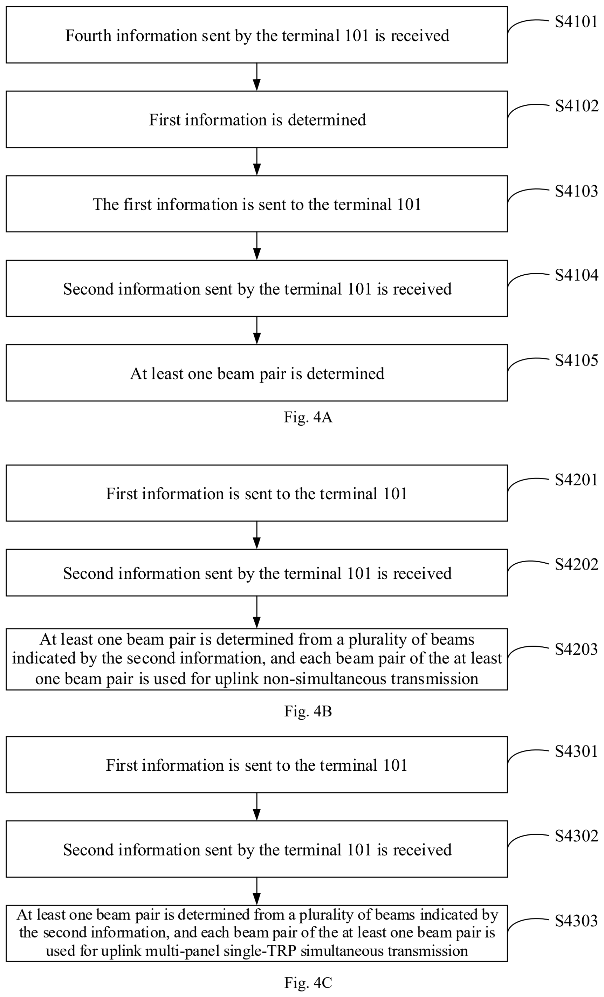

Fig. 4A is a flowchart of an uplink communication method according to an embodiment of the present disclosure. As shown in Fig. 4A, the uplink communication method according to the embodiment of the present disclosure is executed by the network device 102, and includes the following steps.

In step S4101, fourth information sent by the terminal 101 is received.

For optional implementations of step S4101, reference may be made to optional implementations of step S2101 in Fig. 2 and other associated parts in the embodiment involved in Fig. 2, which are not repeated here.

In some embodiments, the network device 102 receives the fourth information sent by the terminal 101, but the present disclosure is not limited to this, and the network device 102 may also receive the fourth information sent by another entity.

In step S4102, first information is determined.

For optional implementations of step S4102, reference may be made to optional implementations of step S2102 in Fig. 2 and other associated parts in the embodiment involved in Fig. 2, which are not repeated here.

In step S4103, the first information is sent to the terminal 101.

For optional implementations of step S4103, reference may be made to optional implementations of step S2103 in Fig. 2 and other associated parts in the embodiment involved in Fig. 2, which are not repeated here.

In some embodiments, the network device 102 sends the first information to the terminal 101, but the present disclosure is not limited to this, and the network device 102 may also send the first information to another entity.

Optionally, the first information is used for the terminal 102 to send second information to the network device 102 based on the first information. For corresponding optional implementations, reference may be made to optional implementations of step S2104 in Fig. 2 and other associated parts in the embodiment in Fig. 2, which are not repeated here.

In step S4104, second information sent by the terminal 101 is received.

For optional implementations of step S4104, reference may be made to optional implementation of step S2104 in Fig. 2 and other associated parts in the embodiment involved in Fig. 2, which are not repeated here.

In some embodiments, the network device 102 receives the second information sent by the terminal 101, but the present disclosure is not limited to this, and the network device 102 may also receive the second information sent by another entity.

In step S4105, at least one beam pair is determined.

For optional implementations of step S4105, reference may be made to optional implementations of step S2105 in Fig. 2 and other associated parts in the embodiment involved in Fig. 2, which are not repeated here.

The communication method according to the embodiment of the present disclosure may include at least one of steps S4101 to S4105. For example, step 4103 may be implemented as an independent embodiment, steps 4104+4105 may be implemented as an independent embodiment, steps 4103+4104+4105 may be implemented as an independent embodiment, steps 4101+4102 may be implemented as an independent embodiment, steps 2101+2102+2103 may be implemented as an independent embodiment, and steps 4101+4102+4103+4104+4105 may be implemented as an independent embodiment.

In some embodiments, steps 4101 and 4102 are optional, and one or more of these steps may be omitted or replaced in different embodiments.

In some embodiments, steps 4103, 4104 and 4105 are optional, and one or more of these steps may be omitted or replaced in different embodiments.

Fig. 4B is a flowchart of an uplink communication method according to an embodiment of the present disclosure. As shown in Fig. 4B, the uplink communication method according to the embodiment of the present disclosure is performed by the network device 102, and includes the following steps.

In step S4201, first information is sent to the terminal 101.

For optional implementations of step S4201, reference may be made to optional implementations of step S2103 of Fig. 2 and step S4103 of Fig. 4A, and other associated parts in the embodiments involved in Fig. 2 and Fig. 4A, which are not repeated here.

In step S4202, second information sent by the terminal 101 is received.

For optional implementations of step S4202, reference may be made to optional implementations of step S2104 of Fig. 2 and step S4104 of Fig. 4A, and other associated parts in the embodiments involved in Fig. 2 and Fig. 4A, which are not repeated here.

In step S4203, at least one beam pair is determined from a plurality of beams indicated by the second information, and each beam pair of the at least one beam pair is used for uplink non-simultaneous transmission.

For optional implementations of step S4203, reference may be made optional implementations of step S2105 of Fig. 2 and step S4105 of Fig. 4A, and other associated parts in the embodiments involved in Fig. 2 and Fig. 4A, which are not repeated here.

The communication method according to the embodiment of the present disclosure may include at least one of steps S4201 to S4203. For example, step 4201 may be implemented as an independent embodiment, steps 4202+4203 may be implemented as an independent embodiment, steps 4201+4202+4203 may be implemented as an independent embodiment, and so on, but the present disclosure is not limited to this.

In some embodiments, step S4201 is optional, and this step may be omitted or replaced in different embodiments.

In some embodiments, steps S4202 and S4203 are optional, and one or more of these steps may be omitted or replaced in different embodiments.

Fig. 4C is a flowchart of an uplink communication method according to an embodiment of the present disclosure. As shown in Fig. 4C, the uplink communication method according to the embodiment of the present disclosure is executed by the network device 102, and includes the following steps.

In step S4301, first information is sent to the terminal 101.

For optional implementations of step S4301, reference may be made to optional implementations of step S2103 of Fig. 2 and step S4103 of Fig. 4A, and other associated parts in the embodiments involved in Fig. 2 and Fig. 4A, which are not repeated here.

In step S4302, second information sent by the terminal 101 is received.

For optional implementations of step S4302, reference may be made to optional implementations of step S2104 of Fig. 2 and step S4104 of Fig. 4A, and other associated parts in the embodiments involved in Fig. 2 and Fig. 4A, which are not repeated here.

In step S4303, at least one beam pair is determined from a plurality of beams indicated by the second information, and each beam pair of the at least one beam pair is used for uplink multi-panel single-TRP simultaneous transmission.

For optional implementations of step S4303, reference may be made to optional implementations of step S2105 of Fig. 2 and step S4105 of Fig. 4A, and other associated parts in the embodiments involved in Fig. 2 and Fig. 4A, which are not repeated here.

The communication method according to the embodiment of the present disclosure may include at least one of steps S4301 to S4303. For example, step 4301 may be implemented as an independent embodiment, steps 4302+4303 may be implemented as an independent embodiment, steps 4301+4302+4303 may be implemented as an independent embodiment, and so on, but the present disclosure is not limited to this.

In some embodiments, step S4301 is optional, and this step may be omitted or replaced in different embodiments.

In some embodiments, steps S4302 and S4303 are optional, and one or more of these steps may be omitted or replaced in different embodiments.

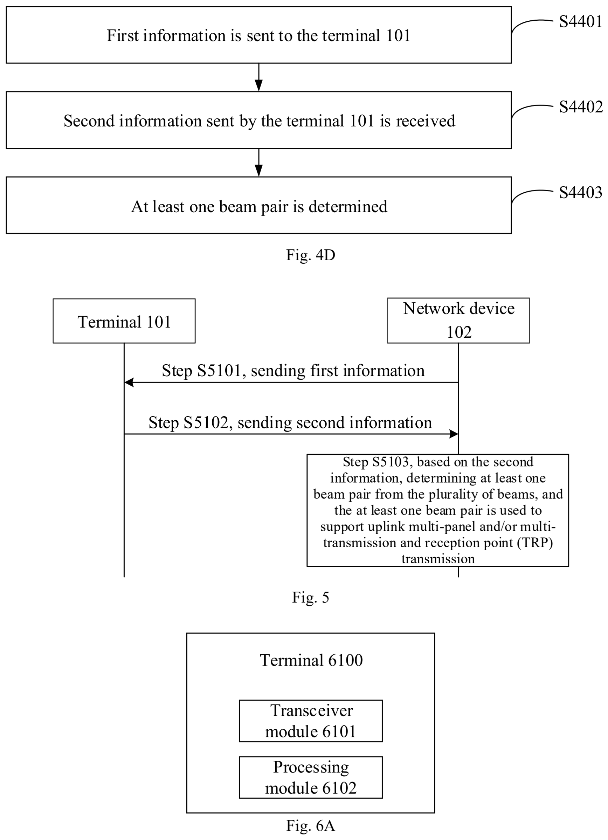

Fig. 4D is a flowchart of an uplink communication method according to an embodiment of the present disclosure. As shown in Fig. 4D, the uplink communication method according to the embodiment of the present disclosure is performed by the network device 102, and includes the following steps.

In step S4401, first information is sent to the terminal 101.

For optional implementations of step S4401, reference may be made to optional implementations of step S2103 in Fig. 2, step S4103 in Fig. 4A, step S4201 in Fig. 4B and step S4301 in Fig. 4C, and other associated parts in the embodiments involved in Fig. 2, Fig. 4A, Fig. 4B and Fig. 4C, which are not repeated here.

In step S4402, second information sent by the terminal 101 is received.

For optional implementations of step S4402, reference may be made to optional implementations of step S2104 in Fig. 2, step S4104 in Fig. 4A, step S4202 in Fig. 4B, step S4302 in Fig. 4C, and other associated parts in the embodiments involved in Fig. 2, Fig. 4A, Fig. 4B and Fig. 4C, which are not repeated here.

In step S4403, at least one beam pair is determined.

For optional implementations of step S4403, reference may be made to optional implementations of step S2105 in Fig. 2, step S4105 in Fig. 4A, step S4203 in Fig. 3B, step S4303 in Fig. 4C, and other associated parts in the embodiments involved in Fig. 2, Fig. 4A, Fig. 4B, and Fig. 4C, which are not repeated here.

The communication method according to the embodiment of the present disclosure may include at least one of steps S4401 to S4403. For example, step 4401 may be implemented as an independent embodiment, steps 4402+4403 may be implemented as an independent embodiment, steps 4401+4402+4403 may be implemented as an independent embodiment, and so on, but the present disclosure is not limited to this.

In some embodiments, step S4401 is optional, and this step may be omitted or replaced in different embodiments.

In some embodiments, steps S4402 and S4403 are optional, and one or more of these steps may be omitted or replaced in different embodiments.

Fig. 5 is a flowchart of an uplink communication method according to an embodiment of the present disclosure. As shown in Fig. 5, the method according to the embodiment of the present disclosure is performed by the communication system 100, and includes the following steps.

In step S5101, the network device sends first information to the terminal, and the first information is used to configure the terminal to perform channel state information (CSI) measurement and beam report.

In step S5102, the terminal sends second information to the network device based on the first information, and the second information indicates a plurality of beams.

In step S5103, based on the second information, the network device determines at least one beam pair from the plurality of beams, and the at least one beam pair is used to support uplink multi-panel and/or multi-transmission and reception point (TRP) transmission.

For optional implementations of step S5101, step S5102 and step S5103, reference may be made to the steps in any one or more of the above embodiments of Fig. 2, Figs. 3A-3D and Figs. 4A-4D, and other associated parts in the embodiments involved in Fig. 2, Figs. 3A-3D and Figs. 4A-4D.

In some embodiments, the above method may include the methods according to the embodiments on the side of the communication system, on the side of the terminal, on the side of the network device, etc., which are not repeated here.

The communication method according to the embodiment of the present disclosure may include at least one of steps S5101 to S5103. For example, step 5101 may be implemented as an independent embodiment, steps 5102+5103 may be implemented as an independent embodiment, steps 5101+5102+5103 may be implemented as an independent embodiment, and so on, but the present disclosure is not limited to this.

In this implementation or embodiment, under the condition of no contradiction, various steps may be independent, arbitrarily combined or exchanged, and optional implementations or examples may be arbitrarily combined, and may be arbitrarily combined with any steps of other implementations or embodiments.

An example introduction to the methods according to the above embodiments is provided in the following.

Embodiment 1: for beam measurement and reporting of the multiple TRP (MTRP) TDM transmission scheme, at least one of the following beam reporting modes is supported.

In some embodiments, group-based beam reporting is based on MTRP (MTRP-based) transmission, and the terminal is configured to report at least one of the following CSI reports.

It is necessary to introduce a new CSI report quantity. Specifically, at least one of the following implementations may be configured through the base station.

Mode 1: for each reported pair of beams (CRI/SSBRI), an uplink transmission spatial filter corresponding to CRI/SSBRI may be used to transmit uplink beams of an uplink TDM transmission scheme or for receiving the uplink beams of the uplink TDM transmission scheme simultaneously, and the uplink beams are not guaranteed to be transmitted simultaneously.

Mode 2: for each reported pair of beams (CRI/SSBRI), an uplink transmission spatial filter corresponding to CRI/SSBRI may be used to transmit uplink beams of an uplink TDM transmission scheme, and the uplink beams are not guaranteed to be transmitted simultaneously.

In some embodiments, non group-based beam reporting is based on MTRP (MTRP-based) transmission, and the terminal is configured to report at least one of the following CSI reports.

It is necessary to introduce a new CSI report quantity. Specifically, at least one of the following implementations may be configured through the base station.

Mode 3: for reported M beams (CRI/SSBRI), an uplink transmission spatial filter corresponding to CRI/SSBRI may be used to transmit uplink beams of an uplink TDM transmission scheme, and the uplink beams are not guaranteed to be transmitted simultaneously.

The value of M may be configured by the network, and may be 2, 3, 4 ..., and a beam pair composed of any two beams may support TDM transmission.

Embodiment 2: for beam measurement and reporting of the multi-panel single-TRP (STRP) transmission scheme, at least one of the following beam reporting mods is supported.

In some embodiments, group-based beam reporting is based on MTRP (MTRP-based) transmission, and a new CSI report quantity needs to be introduced for multi-panel/STRP transmission. Specifically, at least one of the following implementations may be configured through the base station.

Mode 4: for each reported pair of beams (CRI/SSBRI), an uplink transmission spatial filter corresponding to CRI/SSBRI may be used to transmit uplink beams of an uplink multi-panel/STRP transmission scheme or for receiving the uplink beams of the uplink multi-panel/STRP transmission scheme simultaneously, and the uplink beams are guaranteed to be transmitted to the same TRP simultaneously.

Mode 5: for each reported pair of beams (CRI/SSBRI), an uplink transmission spatial filter corresponding to CRI/SSBRI may be used to transmit uplink beams of an uplink multi-panel/STRP transmission scheme, and the uplink beams are guaranteed to be transmitted to the same TRP simultaneously.

In some embodiments, the base station is allowed to configure at least one CSI measurement configuration for beam reporting of uplink transmission in different scenarios under MTRP.

In some embodiments, the above beam reporting modes all support the reporting of N beam pairs, where N>=1, and the specific reported N beam pairs may be configured by the network.

In some embodiments, a UE capability value set index may also be reported to indicate the panel capability of the terminal.

Optionally, only indication of different panel capabilities is supported.

Optionally, indication containing the same panel capability is supported.

Optionally, the capacity information is not included in the report quantity.

In some embodiments, a new terminal capability report may also be introduced for reporting the above beam reporting modes supported by the terminal (Mode 1-Mode 5): the network may determine the CSI measurement configuration configured for the terminal based on the terminal capability (supported beam reporting modes).

Embodiments of the present disclosure also provide a device for implementing any of the above methods. For example, a device is proposed, which includes units or modules for implementing the steps executed by the terminal in any of the above methods. For another example, another device is also proposed, which includes units or modules for implementing the steps executed by the network device (such as the access network device, the core network function node, the core network device, etc.) in any of the above methods.

It should be understood that the division of units or modules in the above device is only a division of logical functions. In actual implementation, they may be fully or partially integrated into one physical entity, or may be physically separated. In addition, the units or modules in the device may be implemented in the form of a processor calling software. For example, the device includes a processor, the processor is connected to a memory, the memory stores instructions, and the processor calls the instructions stored in the memory to implement any one of the above methods or the functions of the units or modules of the above device. The processor is, for example, a general-purpose processor, such as a central processing unit (CPU) or a microprocessor, and the memory is a memory inside the device or a memory outside the device. Alternatively, the units or modules in the device may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above device may be fully implemented in the form of the processor calling software, or fully implemented in the form of the hardware circuit, or partially implemented in the form of the processor calling software and partially implemented in the form of the hardware circuit.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

Fig. 6A is a schematic diagram of a terminal proposed by an embodiment of the present disclosure. As shown in Fig. 6A, a terminal 6100 may include at least one of a transceiver module 6101 and a processing module 6102. In some embodiments, the transceiver module is configured to: receive first information sent by a network device, where the first information is used to configure the terminal to perform channel state information (CSI) measurement and beam reporting; and send second information to the network device based on the first information. The second information indicates a plurality of beams, the second information is used for the network device to determine at least one beam pair from the plurality of beams, and the at least one beam pair is used to support uplink multi-panel and/or multi-transmission and reception point (TRP) transmission.

Optionally, the above transceiver module is used to execute at least one of the communication (transmission and/or reception) steps (such as step S2101, step S2103, step S2104, but not limited to this) executed by the terminal 101 in any of the above methods, which are not repeated here.

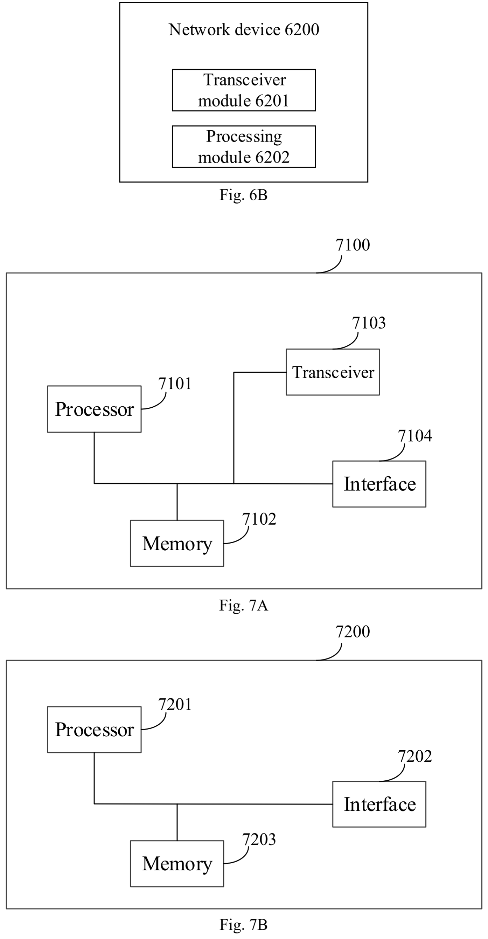

Fig. 6B is a schematic diagram of a network device proposed by an embodiment of the present disclosure. As shown in Fig. 6B, a network device 6200 may include at least one of a transceiver module 6201 and a processing module 6202. In some embodiments, the transceiver module is configured to: send first information to a terminal, where the first information is used to configure the terminal to perform channel state information (CSI) measurement and beam reporting; and receive second information sent by the terminal, where the second information is sent by the terminal based on the first information, and the second information indicates a plurality of beams; and the processing module is configured to determine at least one beam pair from the plurality of beams based on the second information, and the at least one beam pair is used to support uplink multi-panel and/or multi-transmission and reception point (TRP) transmission.

Optionally, the above transceiver module is used to execute at least one of the communication (transmission and/or reception) steps (such as step S2101, step S2103, step S2104, but not limited to this) executed by the network device 102 in any of the above methods, which are not repeated here. Optionally, the above processing module is used to execute at least one of other steps (such as step S2102 and step S2105, but not limited to this) executed by the network device 102 in any of the above methods, which are not repeated here.

In some embodiments, the transceiver module may include a transmitting module and/or a receiving module, which may be separated or integrated. Optionally, the transceiver module may be interchanged with a transceiver.

In some embodiments, the processing module may be one module or include a plurality of sub-modules. Optionally, the plurality of sub-modules execute all or part of the steps needed to be executed by the processing module, respectively. Optionally, the processing module may be interchanged with the processor.

Fig. 7A is a schematic diagram of a communication device 7100 proposed by an embodiment of the present disclosure. The communication device 7100 may be a network device (e.g., an access network device, a core network device, etc.), a terminal (e.g., user equipment, etc.), a chip, chip system, or processor that supports the network device to realize any of the above methods, or a chip, chip system, or processor that supports the terminal to realize any of the above methods. The communication device 7100 may be used to implement the methods described in the above method embodiments, and for details, reference may be made to the descriptions in the above method embodiments.

As shown in Fig. 7A, the communication device 7100 includes one or more processors 7101. The processor 7101 may be a general-purpose processor or a special-purpose processor, for example, a baseband processor or a central processor. The baseband processor may be used to process communication protocols and communication data, and the central processor may be used to control communication devices (such as base stations, baseband chips, terminals, terminal chips, DUs or CUs, etc.), execute programs, and process program data. The processor 7101 is used to call instructions to make the communication device 7100 perform any of the above methods.

In some embodiments, the communication device 7100 further includes one or more memories 7102 for storing instructions. Optionally, all or part of the memories 7102 may be located outside the communication device 7100.

In some embodiments, the communication device 7100 further includes one or more transceivers 7103. When the communication device 7100 includes one or more transceivers 7103, the communication steps such as transmitting/sending and receiving steps in the above methods are executed by the transceiver 7103, and other steps are executed by the processor 7101.

In some embodiments, the transceiver may include a receiver and a transmitter, which may be separated or integrated. Optionally, the terms transceiver, transceiving unit, transceiving machine, transceiving circuit, etc. may be used interchangeably, the terms transmitter, transmitting unit, transmitting machine, transmitting circuit, etc. may be used interchangeably, and the terms receiver, receiving unit, receiving machine, receiving circuit, etc. may be used interchangeably.

Optionally, the communication device 7100 further includes one or more interface circuits 7104, which are connected with the memory 7102, and the interface circuits 7104 may be used to receive signals from the memory 7102 or other devices, and may be used to send signals to the memory 7102 or other devices. For example, the interface circuit 7104 may read an instruction stored in the memory 7102 and send the instruction to the processor 7101.

The communication device 7100 described in the above embodiment may be a network device or a terminal, but the scope of the communication device 7100 described in the present disclosure is not limited to this, and the structure of the communication device 7100 may not be limited by Fig. 7A. The communication device may be a stand-alone device or may be part of a large device. For example, the communication device may be: 1) an independent integrated circuit (IC), or a chip, or a chip system or subsystem; (2) a set with one or more ICs, optionally, the above IC set may also include a storage unit for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

Fig. 7B is a schematic diagram of a chip 7200 proposed by an embodiment of the present disclosure. In a case that the communication device 7100 may be a chip or a chip system, reference may be made to the schematic diagram of the chip 7200 shown in Fig. 7B, but it is not limited to this.

The chip 7200 includes one or more processors 7201, which are used to call instructions to make the chip 7200 perform any of the above methods.

In some embodiments, the chip 7200 further includes one or more interface circuits 7202 connected to the memory 7203, and the interface circuit 7202 may be used to receive signals from the memory 7203 or other devices, and may be used to send signals to the memory 7203 or other devices. For example, the interface circuit 7202 may read an instruction stored in the memory 7203 and send the instruction to the processor 7201. Optionally, the terms interface circuit, interface, transceiver pin, transceiver, etc. may be used interchangeably.

In some embodiments, the chip 7200 further includes one or more memories 7203 for storing instructions. Optionally, all or part of the memories 7203 may be located outside the chip 7200.

The present disclosure also proposes a storage medium on which instructions are stored, which, when executed on the communication device 7100, cause the communication device 7100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also proposes a program product which, when executed by the communication device 7100, causes the communication device 7100 to perform any of the above methods. Alternatively, the program product is a computer program product.

The present disclosure also proposes a computer program that, when run on a computer, causes the computer to perform any of the above methods.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable devices. The computer program may be stored in a computer-readable storage medium or transmitted from one computer-readable storage medium to another. For example, the computer program may be transmitted from a website, computer, server, or data center to another website, computer, server, or data center in a wire (such as a coaxial cable, a fiber optic, a digital subscriber line (DSL)) or wireless (such as infrared, wireless, microwave) manner. The computer-readable storage medium may be any available medium that may be accessed by a computer or a data storage device such as a data center and a server that integrates one or more available media. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the related art may realize that, the units and algorithm steps of the examples described with reference to the embodiments of the present disclosure may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, a device and a unit described above may refer to a corresponding process in the above method embodiments, which are not repeated here.

The above are only implementations of the present disclosure. However, the protection scope of the present disclosure is not limited thereto. Changes or substitutions that may be easily considered by those skilled in the art shall be contained within the protection scope of the present disclosure. Therefore, the protection scope of the present disclosure shall be subject to the protection scope of claims.

## Claims

1. An uplink communication method, performed by a terminal, comprising:
receiving first information sent by a network device, wherein the first information is used to configure the terminal to perform channel state information (CSI) measurement and beam reporting; and
sending second information to the network device based on the first information,
wherein the second information indicates a plurality of beams, the second information is configured for the network device to determine at least one beam pair from the plurality of beams, and the at least one beam pair is configured to support uplink multi-panel and/or multi-transmission and reception point (TRP) transmission.

2. The method according to claim 1, wherein each beam pair of the at least one beam pair is configured for uplink non-simultaneous transmission, or for uplink multi-panel single-TRP simultaneous transmission.

3. The method according to claim 1 or 2, wherein the first information is used to configure the terminal to perform the CSI measurement and beam reporting based on grouped downlink beams; and
the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a different TRP, or each beam of each beam pair of the at least one beam pair corresponds to a different quasi-co-location (QCL) relationship.

4. The method according to claim 1 or 2, wherein the first information is used to configure the terminal to perform the CSI measurement and beam reporting based on grouped downlink beams; and
the second information indicates the at least one beam pair, and each beam pair of the at least one beam pair is configured for uplink non-simultaneous transmission of the terminal,
wherein each beam of each beam pair of the at least one beam pair corresponds to a different TRP, or each beam of each beam pair of the at least one beam pair corresponds to a different QCL relationship.

5. The method according to claim 1 or 2, wherein the first information is used to configure the terminal to perform the CSI measurement and beam reporting based on non-grouped downlink beams; and
the second information indicates the plurality of beams, and any two beams of the plurality of beams are configured for uplink multi-TRP non-simultaneous transmission of the terminal,
wherein each beam of the any two beams corresponds to a different TRP, or each beam of the any two beams corresponds to a different QCL relationship.

6. The method according to claim 1 or 2, wherein the first information is used to configure the terminal to perform the CSI measurement and beam reporting based on grouped downlink beams; and
the second information indicates the at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a same TRP.

7. The method according to claim 1 or 2, wherein the first information is used to configure the terminal to perform the CSI measurement and beam reporting based on grouped downlink beams; and
the second information indicates the at least one beam pair, and each beam pair of the at least one beam pair is configured for uplink multi-panel single-TRP simultaneous transmission of the terminal,
wherein each beam of each beam pair of the at least one beam pair corresponds to a same TRP.

8. The method according to any one of claims 1-7, wherein the first information further indicates a numeric count of the plurality of beams indicated by the second information.

9. The method according to any one of claims 1-8, wherein the second information comprises at least one of the following information:
at least one channel state information reference signal resource indicator (CRI) indicating the beam;
at least one synchronization signal and physical broadcast channel block resource indicator (SSBRI) indicating the beam;
a reference signal receiving power (RSRP) corresponding to each beam; or
a signal to interference plus noise ratio (SINR) corresponding to each beam.

10. The method according to claim 9, wherein the second information further comprises third information, and the third information indicates capability information of a panel of at least one terminal.

11. The method according to any one of claims 1-10, further comprising:
sending fourth information to the network device, wherein the fourth information indicates CSI measurement and beam reporting supported by the terminal, and the fourth information is configured for the network device to determine the first information.

12. An uplink communication method, performed by a network device, comprising:
sending first information to a terminal, wherein the first information is used to configure the terminal to perform channel state information (CSI) measurement and beam reporting;
receiving second information sent by the terminal, wherein the second information is sent by the terminal based on the first information, and the second information indicates a plurality of beams; and
determining at least one beam pair from the plurality of beams based on the second information, wherein the at least one beam pair is configured to support uplink multi-panel and/or multi-transmission and reception point (TRP) transmission.

13. The method according to claim 12, wherein each beam pair of the at least one beam pair is configured for uplink non-simultaneous transmission, or for uplink multi-panel single-TRP simultaneous transmission.

14. The method according to claim 12 or 13, wherein the first information is used to configure the terminal to perform the CSI measurement and beam reporting based on grouped downlink beams;
the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a different TRP, or each beam of each beam pair of the at least one beam pair corresponds to a different quasi-co-location (QCL) relationship.

15. The method according to claim 12 or 13, wherein the first information is used to configure the terminal to perform the CSI measurement and beam reporting based on grouped downlink beams; and
the second information indicates the at least one beam pair, and each beam pair of the at least one beam pair is configured for uplink non-simultaneous transmission of the terminal,
wherein each beam of each beam pair of the at least one beam pair corresponds to a different TRP, or each beam of each beam pair of the at least one beam pair corresponds to a different QCL relationship.

16. The method according to claim 12 or 13, wherein the first information is used to configure the terminal to perform the CSI measurement and beam reporting based on non-grouped downlink beams; and
the second information indicates the plurality of beams, and any two beams of the plurality of beams are configured for uplink multi-TRP non-simultaneous transmission of the terminal,
wherein each beam of the any two beams corresponds to a different TRP, or each beam of the any two beams corresponds to a different QCL relationship.

17. The method according to claim 12 or 13, wherein the first information is used to configure the terminal to perform the CSI measurement and beam reporting based on grouped downlink beams;
the second information indicates the at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a same TRP.

18. The method according to claim 12 or 13, wherein the first information is used to configure the terminal to perform the CSI measurement and beam reporting based on grouped downlink beams; and
the second information indicates the at least one beam pair, and each beam pair of the at least one beam pair is configured for uplink multi-panel single-TRP simultaneous transmission of the terminal,
wherein each beam of each beam pair of the at least one beam pair corresponds to a same TRP.

19. The method according to any one of claims 12-18, wherein the first information further indicates a numeric count of the plurality of beams indicated by the second information.

20. The method according to any one of claims 12-19, wherein the second information comprises at least one of the following information:
at least one channel state information reference signal resource indicator (CRI) indicating the beam;
at least one synchronization signal and physical broadcast channel block resource indicator (SSBRI) indicating the beam;
a reference signal receiving power (RSRP) corresponding to each beam; or
a signal to interference plus noise ratio (SINR) corresponding to each beam.

21. The method according to claim 20, wherein the second information further comprises third information, and the third information indicates capability information of a panel of at least one terminal.

22. The method according to any one of claims 12-21, further comprising:
receiving fourth information sent by the terminal, wherein the fourth information indicates CSI measurement and beam reporting supported by the terminal; and
determining the first information according to the fourth information.

23. An uplink communication method, comprising:
sending by a network device first information to a terminal, wherein the first information is used to configure the terminal to perform channel state information (CSI) measurement and beam reporting;
sending by the terminal second information to the network device based on the first information, wherein the second information indicates a plurality of beams; and
determining by the network device at least one beam pair from the plurality of beams based on the second information, wherein the at least one beam pair is configured to support uplink multi-panel and/or multi-transmission and reception point (TRP) transmission.

24. The method according to claim 23, wherein each beam pair of the at least one beam pair is configured for uplink non-simultaneous transmission, or for uplink multi-panel single-TRP simultaneous transmission.

25. The method according to claim 23 or 24, wherein the first information is used to configure the terminal to perform the CSI measurement and beam reporting based on grouped downlink beams; and
the second information indicates the at least one beam pair, each beam pair of the at least one beam pair is configured for uplink non-simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a different TRP, or each beam of each beam pair of the at least one beam pair corresponds to a different quasi-co-location (QCL) relationship.

26. The method according to claim 23 or 24, wherein the first information is used to configure the terminal to perform the CSI measurement and beam reporting based on grouped downlink beams; and
the second information indicates the at least one beam pair, and each beam pair of the at least one beam pair is configured for uplink non-simultaneous transmission of the terminal,
wherein each beam of each beam pair of the at least one beam pair corresponds to a different TRP, or each beam of each beam pair of the at least one beam pair corresponds to a different QCL relationship.

27. The method according to claim 23 or 24, wherein the first information is used to configure the terminal to perform the CSI measurement and beam reporting based on non-grouped downlink beams; and
the second information indicates the plurality of beams, and any two beams of the plurality of beams are configured for uplink multi-TRP non-simultaneous transmission of the terminal,
wherein each beam of the any two beams corresponds to a different TRP, or each beam of the any two beams corresponds to a different QCL relationship.

28. The method according to claim 23 or 24, wherein the first information is used to configure the terminal to perform the CSI measurement and beam reporting based on grouped downlink beams; and
the second information indicates the at least one beam pair, each beam pair of the at least one beam pair is configured for uplink multi-panel single-TRP simultaneous transmission of the terminal, and each beam pair of the at least one beam pair is further configured for the terminal to simultaneously receive downlink channels or signals sent by a plurality of TRPs,
wherein each beam of each beam pair of the at least one beam pair corresponds to a same TRP.

29. The method according to claim 23 or 24, wherein the first information is used to configure the terminal to perform the CSI measurement and beam reporting based on grouped downlink beams; and
the second information indicates the at least one beam pair, and each beam pair of the at least one beam pair is configured for uplink multi-panel single-TRP simultaneous transmission of the terminal,
wherein each beam of each beam pair of the at least one beam pair corresponds to a same TRP.

30. A terminal, comprising:
a transceiver module configured to:
receive first information sent by a network device, wherein the first information is used to configure the terminal to perform channel state information (CSI) measurement and beam reporting; and
send second information to the network device based on the first information;
wherein the second information indicates a plurality of beams, the second information is configured for the network device to determine at least one beam pair from the plurality of beams, and the at least one beam pair is configured to support uplink multi-panel and/or multi-transmission and reception point (TRP) transmission.

31. A network device, comprising:
a transceiver module configured to:
send first information to a terminal, wherein the first information is used to configure the terminal to perform channel state information (CSI) and beam reporting; and
receive second information sent by the terminal, wherein the second information is sent by the terminal based on the first information, and the second information indicates a plurality of beams; and
a processing module configured to determine at least one beam pair from the plurality of beams based on the second information, wherein the at least one beam pair is configured to support uplink multi-panel and/or multi-transmission and reception point (TRP) transmission.

32. A terminal, comprising:
one or more processors,
wherein the terminal is configured to perform the uplink communication method according to any one of claims 1-11.

33. A network device, comprising:
one or more processors,
wherein the network device is configured to perform the uplink communication method according to any one of claims 12-22.

34. A communication system, comprising a terminal and a network device, wherein the terminal is configured to perform the uplink communication method according to any one of claims 1-11, and the network device is configured to perform the uplink communication method according to any one of claims 12-22.

35. A storage medium, for storing instructions which, when executed on a communication device, cause the communication device to perform the uplink communication method according to any one of claims 1-11 or 12-22.
